# EUROPEAN PATENT APPLICATION

(11) **EP 3 587 833 A1**
(43) Date of publication of application: **01.01.2020**
(21) Application number: 18758456.0
(22) Date of filing: 22.02.2018
(51) Int. Cl.: F16B 5/02, F01N 13/08, F16B 35/00, F16B 35/04

(54) **FASTENING STRUCTURE**

(30) Priority: 23.02.2017 JP 2017032012
(71) Applicant: Mitsubishi Jidosha Kogyo Kabushiki Kaisha, Tokyo 108-8410 (JP)
(72) Inventor: KOJIMA, Yasufumi, Tokyo 108-8410 (JP); HORI, Sumito, Tokyo 108-8410 (JP); TEJIMA, Katsuya, Tokyo 108-8410 (JP); KIDO, Yusuke, Tokyo 108-8410 (JP); AKAMA, Ryoji, Tokyo 108-8410 (JP); YAMAUCHI, Shigekazu, Tokyo 108-8410 (JP)
(74) Representative: Vossius & Partner Patentanwälte Rechtsanwälte mbB
(86) International application number: PCT/JP2018/006514
(87) International publication number: WO 2018/155572

(57) **Abstract**

An object is to provide a bolt fastening structure which is resistant to loosening even in an environment with vibration. A fastening structure 100 according to the invention of the present application is configured such that a male screw 10 having a thread section 11 with a thread ridge 11a and a thread groove 11b, and a female screw 20 forming a recess 20 in a first member 300 serving as a fastening target, the female screw 20 having a threaded section 21 formed in the recess 20 and engaged with the thread section 11, are in a fastened state. In the fastened state, a tip portion 12 forming a leading end of the male screw 10 is in point contact with a bottom surface 23a of the recess 20.

## Description

### Technical Field

The present invention relates to a fastening structure.

### Background Art

In a vehicle, such as an automobile, a component to be fastened is fastened to a mount base using bolt members, which are fasteners, at many locations.

Particularly in places with frequent vibration, such as in an exhaust system, however, such fasteners may be loosened by bearing surface slip under vibration. Accordingly, there is demand for a fastening structure that maintains a fastened state even in a vibration environment.

### Citation List

### Patent Literature

PTL 1: Japanese Unexamined Patent Application Publication No. 2001-295823

### Summary of Invention

### Technical Problem

The present invention has been made on the basis of the problem described above. An object of the present invention is to provide a fastening structure that is resistant to loosening even in an environment with vibration.

### Solution to Problem

A fastening structure according to the invention of the present application is a fastening structure configured such that a male screw having a thread section with a thread ridge and a thread groove, and a female screw forming a recess in a first member serving as a fastening target, the female screw having a threaded section formed in the recess and engaged with the thread section, are in a fastened state. In the fastened state, a tip portion forming a leading end of the male screw is in point contact with a bottom surface of the recess.

### Advantageous Effects of Invention

The fastening structure according to the present invention has the advantageous effect of being resistant to loosening even in an environment with vibration.

### Brief Description of Drawings

[Fig. 1] Fig. 1 illustrates a vehicle which is an embodiment of the present invention.
[Fig. 2] Fig. 2 illustrates a configuration of an engine illustrated in Fig. 1.
[Fig. 3] Fig. 3 illustrates a configuration of a fastening structure according to the embodiment of the present invention.
[Fig. 4] Fig. 4 illustrates, in an exaggerated manner, an operation of the fastening structure illustrated in Fig. 3.
[Fig. 5] Fig. 5 illustrates a conventional fastening structure.
[Fig. 6] Fig. 6 illustrates a modified configuration of an end portion.

### Description of Embodiments

A fastening structure 100 will now be described as an embodiment of the present invention. Although such a fastening structure is used in an exhaust system of a vehicle in the present embodiment, the description of configurations and functions of the vehicle not directly related to the present invention may be omitted where appropriate.

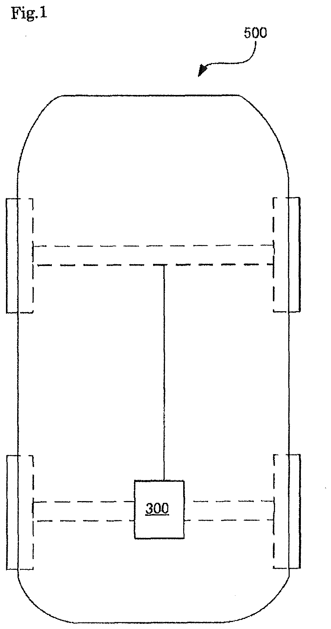

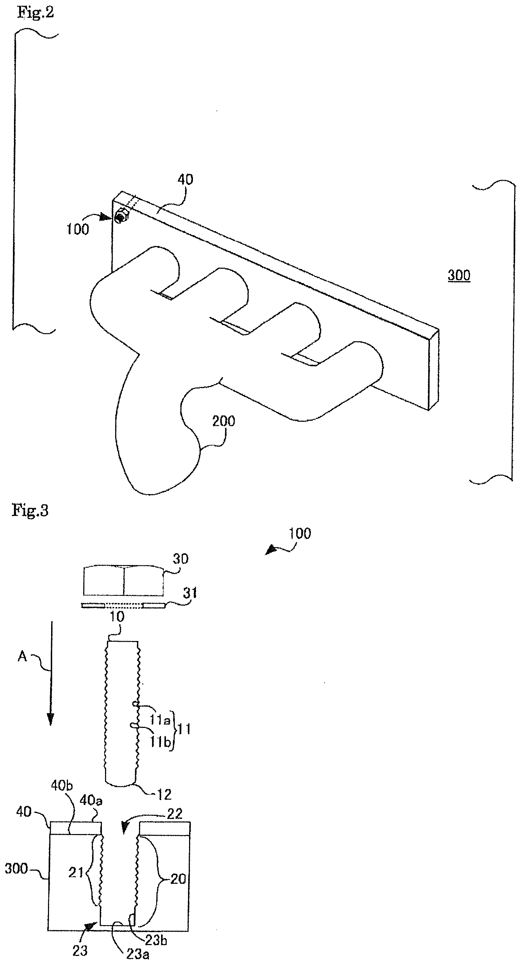

It is desirable that the fastening structure 100 be used, as illustrated in Figs. 1 and 2, in an exhaust system of a vehicle 500, for example, to secure a manifold 200 to an engine 300. However, the configuration is not limited to this, and the fastening structure 100 may be used as a securing member at various other locations.

As illustrated in Fig. 3, the fastening structure 100 includes a stud bolt 10 which is a male screw having a thread section 11 with a thread ridge 11a and a thread groove 11b helically formed, and a screw hole 20 which is a female screw having a screw hole portion 21 serving as a threaded section engaged with the thread section 11.

The fastening structure 100 is fastened and secured by fitting the stud bolt 10 into the screw hole 20 and fastening a flange 40 with a nut 30, with a washer 31 interposed therebetween. That is, in the present embodiment, the flange 40 serves as a second member having an outer surface 40a and an inner surface 40b connected by the stud bolt 10 (male screw). With the fastening structure 100, the flange 40 serving as the second member and having the stud bolt 10 passing therethrough is secured to the engine 300 serving as a first member, by creating a fastened state.

The stud bolt 10 is a so-called fully threaded screw having the thread section 11 helically formed on the periphery thereof. The stud bolt 10 has a tip portion 12 forming a leading end thereof in an insertion direction A.

The tip portion 12 is configured such that an end of the tip portion 12 in the insertion direction A has a curvature.

The screw hole 20 is a screw hole that forms a recess in the engine 300 which is a housing. The engine 300 serves as a fastening target or the first member to which the stud bolt 10 is fastened. The screw hole 20 has an opening 22 formed on a side thereof from which the stud bolt 10 is inserted, and an end portion 23 having a flat bottom surface formed at an end thereof which is opposite the opening 21, with the screw hole portion 21 therebetween. In other words, the screw hole 20 is a recess having a peripheral wall standing on a bottom surface 23a (described below).

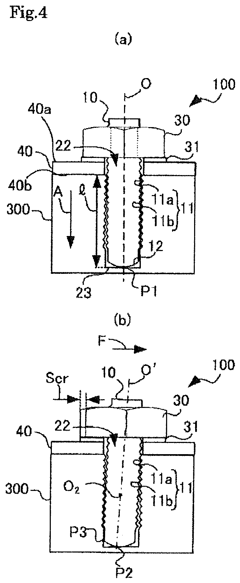

The screw hole 20 is fastened and secured to the stud bolt 10 by fitting the thread section 11 into the screw hole portion 21, with the stud bolt 10 inserted and in contact with the end portion 23. As described below with reference to Fig. 4(a), a normal fastened state of the stud bolt 10 is referred to as a first fastened state.

The end portion 23 has the end face 23a which is a flat bottom surface perpendicular to the insertion direction A, and a side wall face 23b which forms a peripheral wall standing perpendicular to the insertion direction A and has neither thread ridge nor thread groove. In this configuration, the side wall face 23b serves as "first peripheral wall face formed adjacent to the bottom surface" in the peripheral wall of the screw hole 20 which is a recess. At the same time, the screw hole portion 21 serves as "second peripheral wall face formed in a peripheral wall face farther from the end face 23a than the side wall face 23b serving as the first peripheral wall face is".

The end face 23a is flat and the tip portion 12 has a curvature. This allows, in the first fastened state, the end portion 23 and the tip portion 12 to be in point contact at a point P1. The point P1 serves as a first contact point in the first fastened state in the present embodiment.

As described above, when the stud bolt 10 is fastened and secured to the engine 300, the stud bolt 10 and the screw hole 20 are held in point contact at the tip portion 12 and the end portion 23.

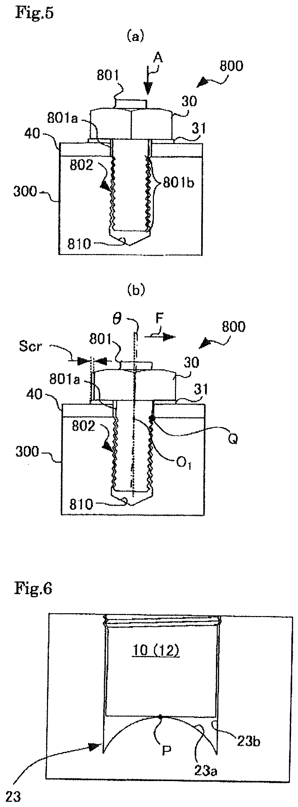

An example of how a conventional stud bolt is loosened will now be described. Note that the tilt of the stud bolt illustrated in Fig. 4(b) and Fig. 5(b) is actually too small to be seen, and thus is exaggerated for the purpose of illustration.

As illustrated in Fig. 5(a), a conventional stud bolt securing structure 800 is configured such that a male screw 801 is fitted into a female screw 802. For simplicity, the aforementioned components, such as the flange 40, the washer 31, and the nut 30, are denoted by the same reference numerals as above and their description will be omitted.

The female screw 802 typically has, as a bottom surface 810, a sloping conical bottom formed into the shape of a drill, which is a tool.

The male screw 801 has an unthreaded portion 801a and a threaded portion 801b. The unthreaded portion 801a is positioned at the same level as the flange 40 in the insertion direction A when the male screw 801 and the female screw 802 are in a fastened state.

When vibration is applied to the stud bolt securing structure 800, the male screw 801 is tilted, as illustrated in Fig. 5(b), by a micro-angle θ about a rotation center O₁ of the male screw 801.

In the vicinity of the contact surface between the nut 30 and the washer 31, the tilt of the micro-angle θ acts as an external force F that produces a sliding distance Scr of the nut 30.

When the external force F generated by vibration is small enough, the external force F acts as a force that moves the nut 30 by the sliding distance Scr. However, it is known that in a structure that limits the sliding distance Scr to a small amount, the external force F not only produces the sliding distance Scr, but also acts in a direction in which, for example, the nut 30 and the male screw 801 are rotated (loosened).

For example, as illustrated in Fig. 5(b), when the unthreaded portion 801 of the male screw 801 is brought into contact with the female screw 802 at a point Q, the micro-angle θ is limited to a small amount and this reduces the sliding distance Scr.

To solve this problem, there is demand for a configuration that maximizes the sliding distance Scr so as to reduce loosening of the nut 30 caused by vibration.

Accordingly, in the present embodiment, the stud bolt 10 is fastened in such a manner that the tip portion 12 and the end portion 23 are in point contact in a fastened state.

An operation of this configuration will now be described using Figs. 4(a) and 4(b).

Fig. 4(a) illustrates the first fastened state in which the stud bolt 10 is fitted into the screw hole 20 and secured.

In this state, as described above, the tip portion 12 of the stud bolt 10 is in point contact with the end portion 23 at the point P1, which is the first contact point.

When the external force F is produced by vibration in the first fastened state, the stud bolt 10 is tilted by the micro-angle θ as in the conventional example.

In the present embodiment, however, the stud bolt 10 has the thread section 11 formed over the entire periphery thereof except the tip portion 12. In other words, the thread section 11 is formed both in a region corresponding to the threaded section 21 and in a region extending from the lower surface to the upper surface of the flange 40, in the first fastened state.

Therefore, although the unthreaded portion 801 and the female screw 802 are in contact at the point Q in the conventional example, the same does not occur in the present embodiment. Additionally, since the tip portion 12 and the end portion 23 are in point contact, a point P, which is a contact point between the tip portion 12 and the end portion 23 can easily move as the tilt continues.

When the tilt stops, as illustrated in Fig. 4(b), the stud bolt 10 and the screw hole 20 are in contact at a second contact point P2 different from the first contact point P1 and also at a point P3 which is a third contact point. A state after this sliding motion is referred to as a second fastened state in the present embodiment.

As described above, the point P moves during tilt. Then, in the second fastened state reached by completion of the tilt, the tip portion 12 and the end portion 23 are held at two points, the point P and a point P'. This determines the positions of the stud bolt 10 before and after the tilt, illustrated in Figs. 4(a) and 4(b). That is, the fastened state of the stud bolt 10 and the screw hole 20 in the present embodiment includes the first fastened state in which the tip portion 12 is in point contact at the first contact point P in the end portion 23, and the second fastened state reached by displacement in a direction in which an axis O' of the stud bolt 10 is tilted with respect to an axis O of the stud bolt 10 in the first fastened state. In the second fastened state, the tip portion 12 is in point contact with the end face 23a at the second contact point P2 different from the first contact point P1, and is also in point contact at the third contact point P3 in the side wall face 23b having neither thread ridge nor thread groove.

As can be seen from the comparison of Figs. 4(a) and 4(b) and Figs. 5(a) and 5(b), since movement of the contact point from the first contact point P1 to the second contact point P2 limits the rotation in the present embodiment, a rotation center O₂ during tilt moves in the insertion direction A to a position lower than that in the conventional example in the drawing.

That is, the micro-angle θ, which is the maximum angle of tilt, is larger than that in the conventional example, and thus a large maximum value of the sliding distance Scr is ensured.

To maximize the sliding distance Scr, it is most desirable that the rotation center O₂ be located at half an insertion length l, which is the distance from the opening 22 to the end portion 23.

In the present embodiment, the diameter of the end portion 23 and the insertion length l are determined such that the rotation center O₂ is located at half the insertion length 1.

In the present embodiment, the tip portion 12 has a curvature.

This configuration facilitates movement of the tip portion 12 and the end portion 23 during tilt. Thus, the micro-angle θ, which is the maximum angle of tilt, is larger, and a large maximum value of the sliding distance Scr is ensured.

In the present embodiment, the fastening structure 100 is a fastening structure configured such that the stud bolt 10 having the thread section 11 with the thread ridge 11a and the thread groove 11b and the tip portion 12, and the screw hole 20 having the screw hole portion 21 into which the stud bolt 10 is screwed, are in a fastened state.

In the present embodiment, the screw hole 20 has the opening 22 formed on the side thereof from which the stud bolt 10 is inserted, and the end portion 23 formed at the end thereof which is opposite the opening 22, with the screw hole portion 21 therebetween.

In the present embodiment, the end portion 23 and the tip portion 12 are in point contact, in the fastened state of the stud bolt 10 and the screw hole 20.

With this configuration, the micro-angle θ, which is the maximum angle of tilt, is larger than that in the conventional example, and thus a large maximum value of the sliding distance Scr is ensured.

In the present embodiment, the surface of the end portion 23 in contact with the tip portion 12 is formed by a flat surface, whereas the surface of the tip portion 12 in contact with the end portion 23 is formed by a curved surface having a curvature.

This configuration facilitates movement of the tip portion 12 and the end portion 23 during tilt. Thus, the micro-angle θ, which is the maximum angle of tilt, is larger, and a large maximum value of the sliding distance Scr is ensured.

The shapes of the end portion 23 and the tip portion 12 are not limited to the configuration described above.

For example, either one of the end portion 23 and the tip portion 12 may have a curvature, or the end portion 23 may have a curvature smaller than that of the tip portion 12. As illustrated in Fig. 6, the end face 23a may be an upwardly recessed surface having a curvature.

The present embodiment has described the configuration in which, in the displacement from the first fastened state to the second fastened state, the contact point between the tip portion 12 and the end portion 23 is moved from the first contact point P1 to the second contact point P2 in the end portion 23. However, the configuration is not limited to this.

For example, in the displacement from the first fastened state to the second fastened state, the contact point between the tip portion 12 and the end portion 23 may be configured such that the contact point of the tip portion 12 with the end portion 23 is moved while the position of the first contact point P1 in the end portion 23 is kept unchanged. That is, the configuration may be made such that in the first fastened state, the tip portion 12 is in point contact at the first contact point P in the end portion 23, and in the second fastened state, the tip portion 12 is in point contact with the end face 23a at the same first contact point P1 and is also in point contact at the third contact point P3 in the side wall face 23b. With this configuration, the rotation of the nut 30 and the male screw 801 is limited by movement of the contact point of the tip portion 12 with the end portion 23, and the same advantageous effects as those of the present embodiment are achieved.

While preferred embodiments of the present invention have been described, the present invention is not limited to specific embodiments. Unless otherwise specified in the description above, various modifications and changes may be made within the scope of the present invention defined in the appended claims.

For example, although the fastening structure is used to secure the manifold in the present embodiment, it may be used for other types of fastening.

Although the stud bolt and the nut are used to secure and fasten the flange in the configuration described in the present embodiment, the bolt does not necessarily need to be a stud bolt.

The advantageous effects described in the embodiments of the present invention are merely illustrations of the most preferred effects of the present invention, and the advantageous effects of the present invention are not limited to those described in the embodiments of the present invention.

### Reference Signs List

10: male screw (stud bolt), 11: thread section (threaded portion), 11a: thread ridge, 11b: thread groove, 12: tip portion, 20: recess (female screw) (screw hole), 21: threaded section, second peripheral wall face (screw hole portion), 22: opening, 23: end portion, 23b: first peripheral wall face (side wall face), 40a: outer surface, 40b: inner surface, 100: fastening structure, P1: first contact point, P2: second contact point, P3: third contact point

## Claims

1. A fastening structure configured such that
a male screw having a thread section with a thread ridge and a thread groove, and
a female screw forming a recess in a first member serving as a fastening target, the female screw having a threaded section formed in the recess and engaged with the thread section, are in a fastened state; and
in the fastened state, a tip portion forming a leading end of the male screw is in point contact with a bottom surface of the recess.

2. The fastening structure according to Claim 1, wherein the recess has a peripheral wall standing on the bottom surface;
the peripheral wall includes a first peripheral wall face formed adjacent to the bottom surface, and a second peripheral wall face formed in a peripheral wall face farther from the bottom surface than the first peripheral wall face is, and the threaded section is formed in the second peripheral wall face;
the fastened state includes a first fastened state in which the tip portion is in point contact with the bottom surface, and a second fastened state reached by displacement in a direction in which an axis of the male screw is tilted with respect to an axis of the male screw in the first fastened state; and
in the second fastened state, the tip portion is in point contact with the bottom surface and also in point contact with the first peripheral wall face.

3. The fastening structure according to Claim 1 or 2, wherein a second member having an outer surface and an inner surface connected by the male screw is secured to the first member by creating the fastened state; and
the thread section is formed both in a region corresponding to the threaded section and in a region extending from the inner surface to the outer surface of the second member, in the fastened state.

4. The fastening structure according to any one of Claims 1 to 3, wherein the bottom surface is formed by a flat surface; and
the tip portion is formed by a curved surface having a curvature.

5. The fastening structure according to any one of Claims 1 to 3, wherein the bottom surface has a curvature; and
the tip portion is formed by a flat surface.
